# EUROPÄISCHE PATENTSCHRIFT

(11) **EP 0 593 004 B1**
(45) Veröffentlichungstag und Bekanntmachung des Hinweises auf die Patenterteilung: **12.03.1997**
(21) Anmeldenummer: 93116481.8
(22) Anmeldetag: 12.10.1993
(51) Int. Cl.: F01N 3/28

(54) **Filter zum Abscheiden von Verunreinigungen aus Abgasen**
Filter for removing pollutants from offgas
Filtre pour éliminer des polluants de gaz d'échappement

(30) Priorität: 16.10.1992 DE 4234930
(43) Veröffentlichungstag der Anmeldung: 20.04.1994
(73) Patentinhaber: Schwäbische Hüttenwerke Gesellschaft mit beschränkter Haftung, D-73414 Aalen (DE)
(72) Erfinder: Haerle, Hans A., Dipl.-Ing., D-73441 Bopfingen (DE)
(74) Vertreter: Lorenz, Werner, Dipl.-Ing.

(56) Entgegenhaltungen:
- EP-A- 0 331 885
- EP-A- 0 470 365
- GB-A- 2 037 607
- US-A- 4 220 625

## Beschreibung

Die Erfindung betrifft einen Filter zum Abscheiden von Verunreinigungen aus Abgasen, insbesondere aus den Abgasen eines Verbrennungsmotores, mit einem Filterkörper, der aus einer Vielzahl von formgepreßten und hochtemperaturbeständigen Filterplatten, insbesondere aus gesintertem Metallpulver, Metallspänen, Metallfasern oder einem Gemisch daraus besteht, die über- bzw. hintereinander angeordnet eine Vielzahl von Strömungskanälen zwischen sich bilden, wobei die Strömungskanäle zur Bildung von Eingangs- und Ausgangskanälen jeweils auf einer Seite offen und auf der anderen Seite geschlossen sind, und wobei die zwischen den Eingangs- und Ausgangskanälen liegenden Wände der Filterplatte Filterflächen darstellen.

Ein Filter dieser Art ist z.B. in der DE-OS 38 18 281 beschrieben. Es sind Filter bekannt, bei denen die Rußfilterkanäle sehr kurz gestaltet sind, wobei die Filterfläche weitgehend der Filterkörperanströmfläche entspricht. Auf diese Weise läßt sich die Wärmemenge, die bei einem Abbrennen des an der Filteroberfläche anhaftenden Rußes entsteht, pro Filterkörperanströmfläche verringern, wodurch Zerstörungen des Filtersystemes verhindert werden.

Nachteilig bei einem derartigen Filter ist jedoch, daß dieser einen sehr großen Durchmesser besitzt und aus strömungstechnischen Gründen auch ein sehr großes Bauvolumen durch die Anströmfläche.

Grundsätzlich wäre es auch möglich, mehrere kleinere Filterflächen hintereinander zu schalten und diese einzeln von dem Abgasstrom anströmen zu lassen.

Nachteilig dabei ist jedoch, daß der hierzu erforderliche konstruktive Aufwand sehr kostenintensiv ist.

Ganz allgemein stellt sich das Problem, daß die zur Zeit eingesetzten Rußfilteranlagen und Rußfiltersysteme den Nachteil haben, daß die eingesetzten Filtermaterialien aufgrund ihrer Porosität eine geringere Wärmeleitfähigkeit haben als massive Materialien. Dies bedeutet, daß bei partiellem Abbrennen des Rußes in einem Kanal die dabei entstehende Wärmemenge nicht schnell genug abgeführt werden kann. Auf diese Weise besteht die Gefahr, daß es zu Materialaufschmelzungen kommt und damit zu einer Beeinträchtigung der Filterwirkung. Brennt der Ruß in mehreren Kanälen gleichzeitig ab, so kann es im Filter, insbesondere im hinteren Bereich, zu so hohen Wärmeenergiedichten kommen, daß der gesamte Filter durchschmilzt.

Insbesondere wenn die Filterplatten eine schlechte Wärmeleitung besitzen, wird die beim Abbrand des Rußes entstehende Wärme, wobei Verbrennungstemperaturen von über 2000 °C entstehen können, zu einem wesentlichen Bestandteil durch den Abgasstrom an den Ausgang des Filters verlagert und führt dort zu einer gefürchteten Wärmeenergieverdichtung, die - wie erwähnt - den Filter zum Durchbrennen bringt.

Dies bedeutete, daß man in der Praxis eine entsprechende Filterwanddicke vorsehen mußte, um eine ausreichende Stabilität zu erhalten und um die spezifische Wärmekapazität zu erhöhen. Andererseits sollte die Filterwanddicke möglichst reduziert werden, um den Gasgegendruck und damit die Kosten zu reduzieren.

Der vorliegenden Erfindung liegt daher die Aufgabe zugrunde, die vorstehend genannten Nachteile zu beseitigen, insbesondere einen Filter der eingangs erwähnten Art zu schaffen, bei dem die Gefahr eines Durchbrennens auch bei einer optimalen Filterwirkung bzw. Filterauslegung so weit wie möglich vermieden wird.

Erfindungsgemäß wird diese Aufgabe dadurch gelöst, daß in die Eingangskanäle Wärmeleitbleche zum Speichern und Verteilen von Wärmeenergie eingesetzt sind.

Durch die erfindungsgemäßen Wärmeleitbleche kann ein Durchbrennen oder eine anderweitige Beschädigung der Filterplatten weitgehend vermieden werden. Aufgrund ihrer Anordnung und Ausgestaltung als Wärmeleitbleche können sie durch ihre hohe Wärmekapazität die beim Abbrand des Rußes entstehende Wärme wesentlich besser speichern und verteilen. Dies bedeutet, sie schützen die Filterplatten vor Übertemperaturen.

Aufgrund der erfindungsgemäßen Anordnung der Wärmeleitbleche speichern diese die punktuell auftretende übermäßige Wärmeenergie in dem Filter zunächst in sich und geben diese Wärmeenergie dann vergleichmäßigend an andere Teile des Filters weiter. Die punktuell auftretende übermäßige Wärme rührt davon, daß der Abbrand in dem Filter nicht stets kontinuierlich auf der gesamten Filterfläche stattfindet, sondern es vielmehr zu unterschiedlichen Zündungen in verschiedenen Bereichen des Filters kommt. Ebenso kann es auch, aufgrund des ungeregelten Durchflusses des Abgases durch den Filter, zu unterschiedlichen Anhäufungen von Partikeln kommen.

Des weiteren sind die Partikel auch nicht gleichmäßig im Abgasstrom verteilt, sondern kommen, abhängig von dem Betriebszustand des Verbrennungsmotors, in unterschiedlich starken Schüben im bzw. am Filter an.

Somit ergeben sich bei punktuellem Abbrand auch punktuelle Überhitzungen des Filters, wobei diese punktuellen Anhäufungen von Wärmeenergie von den Wärmeleitblechen gespeichert und anschließend gleichmäßig weiterverteilt werden.

In vorteilhafter Weise wird man die Wärmeleitbleche so anordnen, daß sie sich wenigstens annähernd über die gesamte Länge des Filterkörpers erstrecken.

Um das Einströmen der Abgase in den Filter so wenig wie möglich negativ durch die Wärmeleitbleche zu beeinflussen, kann in einer vorteilhaften erfindungsgemäßen Weiterbildung vorgesehen sein, daß die Wärmeleitbleche auf der Eingangsseite des Filterkörpers nach innen zurückgesetzt sind.

In der Praxis hat sich herausgestellt, daß eine Zurückversetzung von ca. 5 bis 10 mm ausreichend ist.

Eine sehr vorteilhafte und nicht naheliegende Weiterbildung der Erfindung kann darin bestehen, daß die Wärmeleitbleche wenigstens im Eingangsbereich mit einer oder mehreren Aussparungen oder Durchbrechungen versehen sind.

Die Aussparungen oder Durchbrechungen bewirken, daß damit der Abbrand des an den Filterflächen haftenden Rußes nicht gestört wird bzw. daß der Abbrand besser erfolgt, da im Bereich der Aussparungen und Durchbrechungen die Eingangskanäle nicht geteilt werden, und somit ungehindert jeweils der ganze Raum der Eingangskanäle in diesem Abschnitt zur Verfügung steht. Im hinteren Bereich hingegen, wo die Gefahr eines Durchbrennens aufgrund der höheren Temperaturen am größten ist, sind die Wärmeleitbleche jedoch voll wirksam.

In der Praxis hat sich herausgestellt, daß sich gute Werte erreichen lassen, wenn sich die Aussparungen oder Durchbrechungen bis zur Hälfte, vorzugsweise bis zu zwei Drittel - beginnend von der Eingangsseite - nach hinten erstrecken.

Eine sehr vorteilhafte konstruktive Ausgestaltung bezüglich der Aussparungen oder Durchbrechungen kann darin bestehen, daß die Aussparungen derart ausgebildet sind, daß - in der Draufsicht gesehen - sich die Aussparungen jeweils im mittleren Bereich befinden, wobei sie an der vorderen Stirnseite beginnen und seitliche Lappen aufweisen.

Für einen kontinuierlichen Übergang und eine gleichmäßigere Wärmeverteilung wird man im allgemeinen die Enden der Aussparungen mit abgerundeten Übergängen zu den Vollflächen der Wärmeleitbleche versehen.

Eine besonders vorteilhafte konstruktive Ausgestaltung bezüglich der Aussparungen kann darin bestehen, daß die Aussparungen jeweils wenigstens annähernd die Form einer Hyperbel aufweisen.

Bezüglich Wärmekapazität, Wärmeverteilung und weitgehend ungestörten Abbrand hat sich die Ausgestaltung als sehr vorteilhaft herausgestellt.

Voraussetzung für die Funktionsweise der Wärmeleitbleche ist, daß sie aus einem hochtemperaturbeständigen Material, insbesondere aus Stahlblech bestehen.

In einer vorteilhaften Weiterbildung der Erfindung kann vorgesehen sein, daß die Wärmeleitbleche wenigstens teilweise rauhe Oberflächen aufweisen. Die rauhen Oberflächen können z.B. durch eine Beschichtung mit Pulver oder Fasern erreicht werden, wobei gleichzeitig auch eine entsprechende Vergrößerung der Oberflächen auftritt. Als Pulver oder Fasern können metallische oder keramische Werkstoffe oder auch hochtemperaturbeständige Kunststoffe verwendet werden.

Durch diese Ausgestaltung erfüllen die erfindungsgemäßen Wärmeleitbleche einen doppelten Zweck. Neben ihrer Funktion, die entstehende Wärme aufzunehmen, können sich im Abgas vorhandene Verunreinigungen zusätzlich noch an den Oberflächen der Wärmeleitbleche ansetzen. Dies bedeutet, daß damit der Filter eine deutliche Kapazitätsvergrößerung bzw. eine deutlich größere Aufnahme von Verunreinigungen erhält.

Nachfolgend ist ein Ausführungsbeispiel der Erfindung anhand der Zeichnung prinzipmäßig beschrieben.

Es zeigt:
- Fig. 1: einen schematischen Längsschnitt (ausschnittsweise) durch den erfindungsgemäßen Filterkörper;
- Fig. 2: einen Schnitt nach der Linie II-II der Fig. 1;
- Fig. 3: eine verkleinerte Draufsicht auf ein erfindungsgemäßes Wärmeleitblech,
- Fig. 4: eine ausschnittsweise Darstellung eines Wärmeleitbleches mit beschichteten Oberflächen.

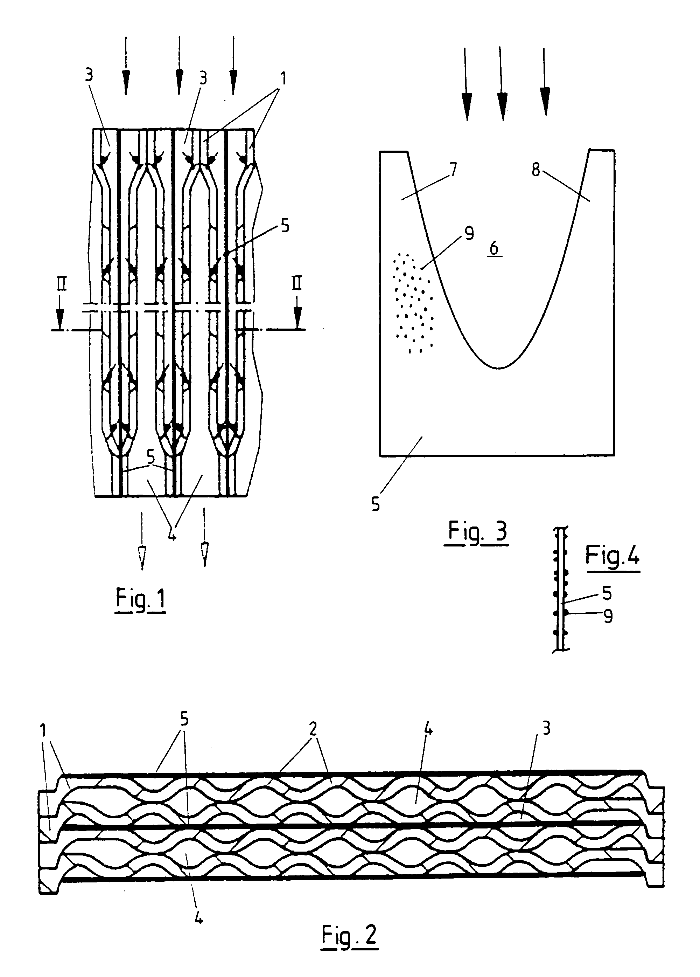

Der Aufbau eines Filters der beschriebenen Art ist grundsätzlich von bekannter Bauart, weshalb dieser nachfolgend nur kurz beschrieben wird. Er ist aus einer Vielzahl von formgepreßten, hochtemperaturbeständigen Filterplatten 1 aufgebaut, die übereinander bzw. nebeneinander angeordnet sind. Die Filterplatten 1 können gesintert sein und besitzen eine wellenförmige Oberfläche derart, daß sich in Strömungsrichtung (siehe Pfeile in der Fig. 1) Strömungskanäle ergeben. Dabei bilden jeweils die Erhöhungen der Wellen 2 gleichzeitig Abstandshalter für die benachbart dazu liegende Filterplatte 1, wobei jeweils ein Wellenberg über einem Wellental und umgekehrt liegt.

Die Filterplatten 1 sind identisch aufgebaut und werden spiegelbildlich jeweils aneinandergefügt. An ihren stirnseitigen Enden - bezogen auf die Einlauf- und die Auslaufseite - sind sie mit abgeknickten Enden versehen, die in einem Flachstück auslaufen. Durch die spiegelbildliche Zusammensetzung der einzelnen Filterplatten liegen jeweils abwechselnd auf der Eingangsseite und der Ausgangsseite je zwei derartige Flachteile aneinander an, während jeweils auf einer Seite eine Auslauföffnung und auf der gegenüberliegenden Seite eine Einlauföffnung entsteht.

Wie aus der Fig. 1 ersichtlich ist, werden auf diese Weise abwechselnd nebeneinander Eingangskanäle 3, die auf der Ausgangsseite abgeschlossen sind und Ausgangskanäle 4, die auf der Eingangsseite abgeschlossen sind, gebildet. Die Verbindung der einzelnen Filterplatten kann durch ein Versintern oder Verschweissen an den Flachstellen erfolgen.

Die Abdichtung an den Längsseiten erfolgt durch stufenförmige Ränder (siehe Fig. 1).

Durch diese Ausgestaltung muß das Abgas die porösen Filterwände, die die Trennung zwischen den Eingangskanälen 3 und den Ausgangskanälen 4 herstellen, durchströmen, wobei sich die abzuscheidenden Verunreinigungen, insbesondere Ruß, an den Filterwänden absetzen, und wobei eine Rußkonversion bzw. Rußvergasung stattfindet. Nach Durchgang durch die Filterwände zwischen den Eingangskanälen 3 und den Ausgangskanälen 4 können die auf diese Weise gereinigten Abgase wieder aus dem Filterkörper ausströmen.

In den Eingangskanälen 3 sind nun Wärmeleitbleche 5 angeordnet, die durch die Wellenberge bzw. Wellentäler entsprechend positioniert sind. Die Verbindung mit den einzelnen Filterplatten 1 erfolgt auf der Ausgangseite, wobei die Wärmeleitbleche 5 jeweils zwischen die flachen Enden gelegt und z.B. mit diesen verschweißt sind.

Wie ersichtlich, erstrecken sich die Wärmeleitbleche 5 nahezu über die gesamte Breite und Länge der Filterplatten, wobei jedoch eine Aussparung 6 dergestalt vorgesehen ist, daß beginnend von der Einlaufseite her ein mittlerer Bereich bis zum letzten Drittel des Wärmeleitbleches 5 offen bleibt. Dies bedeutet, der Raum in dem Eingangskanal 3 ist in diesem Bereich nicht durch ein Wärmeleitblech 5 versperrt und es kann ein ungehinderter Abbrand von Ruß stattfinden, der sich an den Filterwänden abgesetzt hat.

Wie aus der Fig. 3 ersichtlich ist, bildet die Form der Aussparung 6 eine Hyperbel mit entsprechend abgerundetem Fußbereich und zwei seitlichen Lappen 7 und 8.

Als Material für die Wärmeleitbleche 5 werden Tafelbleche verwendet, z.B. mit einem Chromgehalt von 19 bis 25 %, einem Nickelgehalt von 20 bis 60 %, einem Anteil von Silizium von mehr als 1 % und von Aluminium bis 5 %, Rest Eisen.

Aus den Fig. 3 und 4 ist ein Ausführungsbeispiel ersichtlich, bei dem die Oberflächen eines Wärmeleitbleches 5 mit Pulver oder Fasern 9 beschichtet sind, wodurch sich eine entsprechende Oberflächenvergrößerung und entsprechend rauhe Oberflächen ergeben, an denen sich Verunreinigungen ablagern können.

## Patentansprüche

1. Filter zum Abscheiden von Verunreinigungen aus Abgasen, insbesondere aus den Abgasen eines Verbrennungsmotors, mit einem Filterkörper, der aus einer Vielzahl von formgepreßten und hochtemperaturbeständigen Filterplatten, insbesondere aus gesintertem Metallpulver, Metallspänen, Metallfasern oder einem Gemisch daraus besteht, die über- bzw. hintereinander angeordnet eine Vielzahl von Strömungskanälen zwischen sich bilden, wobei die Strömungskanäle zur Bildung von Eingangs- und Ausgangskanälen jeweils auf einer Seite offen und auf der anderen Seite geschlossen sind, und wobei die zwischen den Eingangs- und Ausgangskanälen liegenden Wände der Filterplatten Filterflächen darstellen,
**dadurch gekennzeichnet**, daß in die Eingangskanäle (3) Wärmeleitbleche (5) zum Speichern und Verteilen von Wärmeenergie eingesetzt sind.

2. Filter nach Anspruch 1,
**dadurch gekennzeichnet**, daß sich jedes Wärmeleitblech (5) wenigstens annähernd über die gesamte Länge des Filterkörpers erstreckt.

3. Filter nach Anspruch 1 oder 2,
**dadurch gekennzeichnet**, daß die Wärmeleitbleche (5) auf der Eingangsseite des Filterkörpers nach innen zurückgesetzt sind.

4. Filter nach einem der Ansprüche 1 bis 3,
**dadurch gekennzeichnet**, daß die Wärmeleitbleche (5) wenigstens im Eingangsbereich mit einer oder mehreren Aussparungen oder Durchbrechungen (6) versehen sind.

5. Filter nach Anspruch 4,
**dadurch gekennzeichnet**, daß sich die Aussparungen oder Durchbrechungen (6) wenigstens bis zur Hälfte der Länge der Eingangskanäle (3) erstrecken.

6. Wärmeleitblech nach Anspruch 4 oder 5,
**dadurch gekennzeichnet**, daß die Aussparungen (6) derart ausgebildet sind, daß - in der Draufsicht gesehen - sich die Aussparungen jeweils im mittleren Bereich befinden, wobei sie an der vorderen Stirnseite beginnen und seitliche Lappen (7,8) aufweisen.

7. Filter nach Anspruch 6,
**dadurch gekennzeichnet**, daß die Aussparungen (6) jeweils wenigstens annähernd die Form einer Hyperbel aufweisen.

8. Filter nach einem der Ansprüche 1 bis 7,
**dadurch gekennzeichnet**, daß die Wärmeleitbleche (5) aus hochtemperaturfesten Tafelblechen bestehen mit einem Chromgehalt von mehr als 19 % in Gewicht und einem Nickelgehalt von mindestens 20 % in Gewicht.

9. Filter nach Anspruch 8,
**dadurch gekennzeichnet**, daß der Nickelgehalt zwischen 20 und 60 % in Gewicht beträgt.

10. Filter nach Anspruch 8 oder 9,
**dadurch gekennzeichnet**, daß das Tafelblech einen Siliziumgehalt von mehr als 1 % in Gewicht und einen Aluminiumanteil bis zu 5 % in Gewicht aufweist.

11. Filter nach einem der Ansprüche 1 bis 10,
**dadurch gekennzeichnet**, daß die Wärmeleitbleche (5) an ihren hinteren Enden mit den Filterplatten (1) verschweißt sind.

12. Filter nach einem der Ansprüche 1 bis 11,
**dadurch gekennzeichnet**, daß die Wärmeleitbleche (5) wenigstens teilweise rauhe Oberflächen aufweisen.

13. Filter nach Anspruch 12,
**dadurch gekennzeichnet**, daß die Wärmeleitbleche (5) mit Pulver oder Fasern (9) beschichtet sind.

14. Filter nach Anspruch 13,
**dadurch gekennzeichnet**, daß die Pulver oder Fasern (9) aus metallischen oder keramischen Werkstoffen oder aus Kunststoffen bestehen.

## Claims

1. Filter for removing pollutants from exhaust gases, in particular from the exhaust gases of an internal combustion engine, comprising a filter body consisting of a plurality of compression moulded and high-temperature resistant filter plates, in particular made of sintered metal powder, metal chips, metallic fibres or a mixture thereof, which are arranged above or behind one another and form between them a plurality of flow channels, the flow channels each being open at one end and closed at the other end in order to form inlet and outlet channels, and the walls of the filter plates situated between the inlet and outlet channels constituting filter surfaces, characterised in that heat-conducting baffles (5) for storing and distributing thermal energy are inserted into the inlet channels (3).

2. Filter according to claim 1, characterised in that each heat-conducting baffle (5) extends at least approximately over the entire length of the filter body.

3. Filter according to claim 1 or claim 2, characterised in that the heat-conducting baffles (5) are inwardly recessed at the inlet end of the filter body.

4. Filter according to one of claims 1 to 3, characterised in that the heat-conducting baffles (5) are provided at least in the inlet region with one or more recesses or openings (6).

5. Filter according to claim 4, characterised in that the recesses or openings (6) extend at least over half the length of the inlet channels (3).

6. Heat-conducting baffle according to claim 4 or claim 5, characterised in that the recesses (6) are designed in such a manner that, when viewed from above, the recesses are each situated in the central region, beginning at the front end face and having lateral tabs (7, 8).

7. Filter according to claim 6, characterised in that the recesses (6) are each at least approximately hyperbolic.

8. Filter according to one of claims 1 to 7, characterised in that the heat-conducting baffles (5) consist of high-temperature resistant single rolled sheets with a chromium content of more than 19 % by weight and a nickel content of at least 20 % by weight.

9. Filter according to claim 8, characterised in that the nickel content is between 20 and 60 % by weight.

10. Filter according to claim 8 or claim 9, characterised in that the single rolled sheet has a silicon content of more than 1 % by weight and an aluminium content of up to 5 % by weight.

11. Filter according to one of claims 1 to 10, characterised in that the heat-conducting baffles (5) are welded at their rear ends to the filter plates (1).

12. Filter according to one of claims 1 to 11, characterised in that the heat-conducting baffles (5) have at least partially rough surfaces.

13. Filter according to claim 12, characterised in that the heat-conducting baffles (5) are coated with powder or fibres (9).

14. Filter according to claim 13, characterised in that the powders or fibres (9) consist of metal or ceramic materials or of plastics.

## Revendications

1. Filtre pour éliminer des polluants de gaz d'échappement, notamment des gaz d'échappement d'un moteur à combustion, ayant un corps filtrant constitué d'une série de plaques filtrantes formées à la presse et résistant aux températures élevées, notamment en poudre métallique frittée, copeaux métalliques, fibres métalliques ou en un mélange de ces matériaux, qui sont superposées, respectivement disposées les unes derrière les autres, en délimitant entre elles une série de canaux de circulation pour constituer des canaux d'entrée et des canaux de sortie respectivement ouverts à une extrémité et fermés à l'autre, les parois des plaques filtrantes disposées entre les canaux d'entrée et les canaux de sortie représentant des surfaces filtrantes,
**caractérisé en ce que** dans les canaux d'entrée (3) sont incorporées des tôles conductrices de la chaleur (5) pour accumuler et distribuer de l'énergie thermique.

2. Filtre selon la revendication 1,
**caractérisé en ce que** chaque tôle conductrice de la chaleur (5) s'étend au moins approximativement sur toute la longueur du corps filtrant.

3. Filtre selon la revendication 1 ou la revendication 2,
**caractérisé en ce que** les tôles conductrices de la chaleur (5) sont décalées vers l'intérieur par rapport à la face d'entrée du corps filtrant.

4. Filtre selon l'une des revendications 1 à 3,
**caractérisé en ce que** les tôles conductrices de la chaleur (5) comportent au moins dans la zone d'entrée un ou plusieurs évidements ou entailles (6).

5. Filtre selon la revendication 4,
**caractérisé en ce que** les évidements ou entailles (6) s'étendent au moins jusqu'à la moitié des canaux d'entrée (3).

6. Tôle conductrice de la chaleur selon la revendication 4 ou la revendication 5,
**caractérisé en ce que** les évidements (6) sont agencés de telle manière que - vus de dessus - ces évidements se trouvent dans la zone centrale, et débutent à la face frontale avant en présentant des pattes latérales (7, 8).

7. Filtre selon la revendication 6,
**caractérisé en ce que** les évidements (6) ont au moins approximativement la forme d'une hyperbole.

8. Filtre selon l'une des revendications 1 à 7,
**caractérisé en ce que** les tôles conductrices de la chaleur (5) sont constituées de tôle plate résistant aux hautes températures ayant une teneur en chrome de plus de 19% en poids et une teneur en nickel d'au moins 20% en poids.

9. Filtre selon la revendication 8,
**caractérisé en ce que** la teneur en nickel se trouve entre 20 et 60% en poids.

10. Filtre selon la revendication 8 ou la revendication 9,
**caractérisé en ce que** la tôle plate a une teneur en silicium de plus de 1% en poids et une teneur en aluminium allant jusqu'à 5% en poids.

11. Filtre selon l'une des revendications 1 à 10,
**caractérisé en ce que** les tôles conductrices de la chaleur (5) sont liées par soudure à des plaques filtrantes (1) à leur extrémité arrière.

12. Filtre selon l'une des revendications 1 à 11,
**caractérisé en ce que** les tôles conductrices de la chaleur (5) comportent au moins partiellement une surface rugueuse.

13. Filtre selon la revendication 12,
**caractérisé en ce que** les tôles conductrices de la chaleur (5) sont recouvertes de poudre ou de fibres (9).

14. Filtre selon la revendication 13,
**caractérisé en ce que** la poudre ou les fibres (9) sont constituées de matériaux métalliques ou céramiques ou de matières synthétiques.
